# EUROPEAN PATENT APPLICATION

(11) **EP 3 531 363 A1**
(43) Date of publication of application: **28.08.2019**
(21) Application number: 18201455.5
(22) Date of filing: 19.10.2018
(51) Int. Cl.: G06Q 30/06

(54) **SYSTEMS AND METHODS FOR TRANSFERRING SHOPPING CART DATA TO MOBILE DEVICES**

(30) Priority: 21.02.2018 US 201862633105 P; 25.05.2018 US 201815989342
(71) Applicant: Perfect Corp., 231 New Taipei City (TW)
(72) Inventor: Lin, Kuo-Sheng, 241 New Taipei City (TW); Lin, Yi-Wei, 231 New Taipei City (TW)
(74) Representative: Stöckeler, Ferdinand

(57) **Abstract**

A cosmetic applicator device displays a user interface to a user, where the user interface comprises a virtual mirror and graphical components for selecting corresponding cosmetic products. A selection of a cosmetic product is obtained from the user, and application of the selected cosmetic product on the facial region of the user is displayed in the virtual mirror. Shopping cart data comprising a listing of the selected cosmetic products is generated. The cosmetic applicator device establishes a first connection with a server device and transmits a device identifier unique to the cosmetic applicator device and the shopping cart data to the server device via the first connection. Responsive to receiving a device query broadcast by a portable device via a second connection, the cosmetic applicator device transmits the device identifier to the portable device, which utilizes the device identifier to obtain the shopping cart data from the server device.

## Description

### CROSS-REFERENCE TO RELATED APPLICATION

This application claims priority to, and the benefit of, U.S. Provisional Patent Application entitled, "Method to transfer shopping cart information between devices," having Serial No. 62/633,105, filed on February 21, 2018, which is incorporated by reference in its entirety.

### TECHNICAL FIELD

The present disclosure generally relates to data communication and more particularly, to systems and methods for transferring shopping cart data to mobile devices.

### BACKGROUND

In retail establishments, professional makeup artists commonly assist individuals with applying cosmetic products to achieve a desired look. In some establishments, makeup artists utilize setups that allow individuals to evaluate cosmetic products. With the proliferation of smartphones, tablets, and other portable devices, people have the ability to access digital content virtually any time. However, there is a need for allowing consumers to efficiently and securely obtain shopping cart data on their portable devices for purposes of purchasing cosmetic products.

### SUMMARY

In accordance with one embodiment, a cosmetic applicator device displays a user interface to a user, the user interface comprising a virtual mirror and graphical components for selecting corresponding cosmetic products. A selection of a cosmetic product is obtained from the user, and application of the selected cosmetic product on the facial region of the user is displayed in the virtual mirror. Shopping cart data comprising a listing of the selected cosmetic products is generated. The cosmetic applicator device establishes a first connection with a server device and transmits a device identifier unique to the cosmetic applicator device and the shopping cart data to the server device via the first connection. Responsive to receiving a device query broadcast by a portable device via a second connection, the cosmetic applicator device transmits the device identifier to the portable device, which utilizes the device identifier to obtain the shopping cart data from the server device.

In accordance with another embodiment, a server device establishes a first connection with a cosmetic applicator device configured for performing virtual application of cosmetic products. The server device obtains a device identifier and corresponding shopping cart data from the cosmetic applicator device via the first connection, where the device identifier is unique to the cosmetic applicator device. The server device receives, from a portable device, a request to download the shopping cart data based on an identifier for a device discovered by the portable device. The server device compares the identifier utilized for requesting the shopping cart data with the device identifier obtained from the cosmetic applicator device. Responsive to the identifier matching the device identifier, the server device transmits the requested shopping cart data to the portable device.

In accordance with another embodiment, a portable device broadcasts a query over a first connection to discover devices and obtains one or more device identifiers in response to the query. For each of the one or more device identifiers, the portable device transmits a request to a server device to download shopping cart data, where transmitting the request is performed utilizing each of the one or more device identifiers. Responsive to one of the one or more device identifiers matching a device identifier sent by a cosmetic applicator device configured to perform virtual application of cosmetic products, the server device transmits shopping cart data in response to the request, where the device identifier is sent by the cosmetic applicator device to the server device via a second connection.

### BRIEF DESCRIPTION OF THE DRAWINGS

Various aspects of the disclosure can be better understood with reference to the following drawings. The components in the drawings are not necessarily to scale, with emphasis instead being placed upon clearly illustrating the principles of the present disclosure. Moreover, in the drawings, like reference numerals designate corresponding parts throughout the several views.
FIG. 1 is a block diagram of a networked environment for transferring shopping cart data to a portable device in accordance with various embodiments of the present disclosure.
FIG. 2 is a schematic diagram of the computing devices of FIG. 1 in accordance with various embodiments of the present disclosure.
FIG. 3 is a top-level flowchart illustrating examples of functionality implemented as portions of the computing device of FIG. 1 for transferring shopping cart data to a portable device according to various embodiments of the present disclosure.

### DETAILED DESCRIPTION

Various embodiments are disclosed for transferring shopping cart data to a portable device. In accordance with various embodiments, a cosmetic applicator device is provided in a retail establishment and is configured for displaying a user interface to a user, where the user interface comprises a virtual mirror for displaying a facial region of a customer. With the assistance of a makeup professional, the customer selects one or more cosmetic products to try on using the virtual application feature of the cosmetic applicator device. Once the customer selects the desired cosmetic products, shopping cart data is generated and uploaded to a server device. The cosmetic applicator device also sends a device identifier unique to the cosmetic applicator device to the server device.

In accordance with various embodiments, the customer invokes an application on the customer's portable device, thereby causing the portable device to broadcast a query for purposes of discovering devices in close proximity to the portable device. For some embodiments, the query is broadcast over a short range communication interface. In response to the query, the portable device may receive one or more device identifiers from devices responding to the query where such devices may include the cosmetic applicator device provided in the retail establishment. The portable device utilizes the one more device identifiers to request shopping cart data from the server device. One skilled in the art will appreciate that Bluetooth is a wireless technology standard for exchanging data over short distances from fixed and mobile devices and for building personal area networks (PANs).

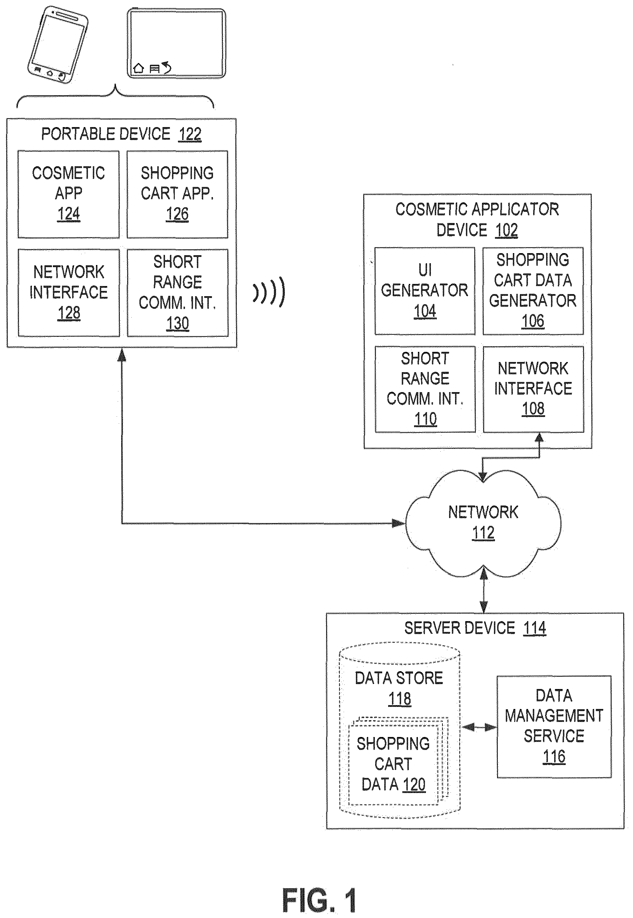

A description of a networked environment for transferring shopping cart data to a portable device is now described followed by a discussion of the operation of the components within the system. FIG. 1 is a block diagram of a networked environment that includes a cosmetic applicator device 102, a server device 114, and a portable device 122. Both the cosmetic applicator device 102 and the portable device 122 may be embodied as a computing device such as, but not limited to, a smartphone, a tablet computing device, a laptop, and so on. The server device 114 may comprise a server computer or any other system providing computing capability. Alternatively, the server device 114 may employ a plurality of computing devices that can be arranged, for example, in one or more server banks, computer banks or other arrangements. Such computing devices can be located in a single installation or can be distributed among different geographical locations.

The cosmetic applicator device 102 includes a UI generator 104, a shopping cart data generator 106, a network interface 108, and a short range communication interface 110. The UI generator 104 is configured to display a user interface to a user, where the user interface may include a virtual mirror for displaying virtual application of cosmetic products onto a facial region of the user. The user interface further comprises graphical components for allowing the user to select desired cosmetic products. The shopping cart data generator 106 is configured to obtain user input comprising a selection of one or more desired cosmetic products and to generate shopping cart data. The network interface 108 allows the cosmetic applicator device 102 to be coupled to a network 112 such as, for example, the Internet, intranets, extranets, wide area networks (WANs), local area networks (LANs), wired networks, wireless networks, or other suitable networks, *etc.,* or any combination of two or more such networks. Through the network 112, the computing device 102 may be communicatively coupled to other computing devices such as the server device 114 for purposes of uploading shopping cart data.

Alternatively, the network interface 108 may allow the cosmetic applicator device 102 to communicate with other devices over a mobile communication network that may comprise, for example, a GSM (Global System for Mobile Communications) network, a CDMA (Code Division Multiple Access) network, a WCDMA (Wideband Code Division Multiple Access) network, an LTE (Long-Term Evolution) network, and so on. The short range communication interface 110 allows the cosmetic applicator device 102 to communicate with other devices in close proximity (ranging from a few inches to a few meters) through a number of wireless technologies including, but not limited to, Bluetooth, NFC (near field communication), Zigbee, and so on.

The server device 114 includes a data management service 116 configured to communicate with both the cosmetic applicator device 102 and the portable device 122. The data management service 116 obtains a device identifier and shopping cart data 120 transmitted by the cosmetic applicator device 102, where the data is then stored in a data store 118. Specifically, the data management service 116 links the device identifier and other information (e.g., time stamp) with the shopping cart data 120 when storing the data in the data store 118. The data management service 116 is further configured to communicate shopping cart data 120 to the portable device 122 in response to a request sent by the portable device 122. Specifically, if the request sent by the portable device 122 includes a device identifier that matches a device identifier found in the data store 118 of the server device 114, the server device 114 sends the corresponding shopping cart data 120 to the portable device 122.

The portable device 122 includes at least one of: a cosmetic application 124 and, a shopping cart application 126. In some embodiments, the cosmetic application 124 and the shopping cart application 126 can be integrated into a single application. In other embodiments, the cosmetic application 124 and the shopping cart application 126 can be implemented as two separate applications. The portable device 122 further includes a network interface, and a short range communication interface 130. The cosmetic application 124 executes on the portable device 122 and provides such functionality as virtual application of cosmetic products to mimic the results achieved by a makeup professional using the cosmetic applicator device 102. The shopping cart application 126 requests and obtains shopping cart data 120 from the server device 114, thereby allowing the user to purchase the cosmetic products selected with the aid of a makeup professional using the cosmetic applicator device 102.

As with the network interface 108 in the cosmetic applicator device 102, the network interface 128 in the portable device 122 similarly allows the portable device 122 to be coupled to a network 112 such as, for example, the Internet, intranets, extranets, wide area networks (WANs), local area networks (LANs), wired networks, wireless networks, or other suitable networks, *etc.,* or any combination of two or more such networks. Through the network 112, the portable device 122 may be communicatively coupled to other computing devices such as the server device 114 for purposes of retrieving shopping cart data. Alternatively, the network interface 128 may allow the portable device 122 to communicate with other devices over a mobile communication network that may comprise, for example, a GSM network, a CDMA network, a WCDMA network, an LTE network, and so on. The short range communication interface 130 allows the portable device 122 to communicate with other devices in close proximity (ranging from a few inches to a few meters) through a number of wireless technologies including, but not limited to, Bluetooth, NFC, Zigbee, and so on.

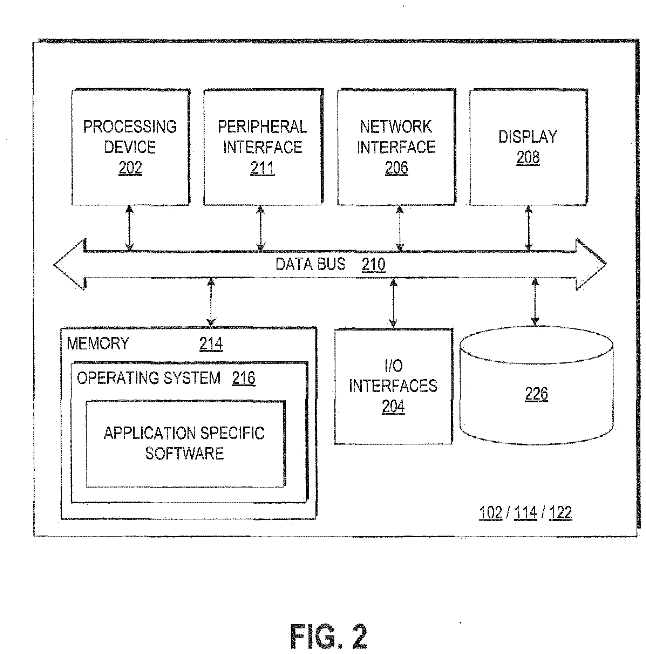

FIG. 2 illustrates a schematic block diagram for each of the cosmetic applicator device 102, the server device 114, and the portable device 122 in FIG. 1. Each of these computing devices 102, 114, 122 may be embodied in any one of a wide variety of wired and/or wireless computing devices, such as a desktop computer, portable computer, dedicated server computer, multiprocessor computing device, smart phone, tablet, and so forth. As shown in FIG. 2, each of these computing devices 102, 114, 122 comprises memory 214, a processing device 202, a number of input/output interfaces 204, a network interface 206, a display 208, a peripheral interface 211, and mass storage 226, wherein each of these components are connected across a local data bus 210.

The processing device 202 may include any custom made or commercially available processor, a central processing unit (CPU) or an auxiliary processor among several processors associated with the computing device, a semiconductor based microprocessor (in the form of a microchip), a macroprocessor, one or more application specific integrated circuits (ASICs), a plurality of suitably configured digital logic gates, and other well known electrical configurations comprising discrete elements both individually and in various combinations to coordinate the overall operation of the computing system.

The memory 214 may include any one of a combination of volatile memory elements (e.g., random-access memory (RAM, such as DRAM, and SRAM, *etc*.)) and nonvolatile memory elements (e.g., ROM, hard drive, tape, CDROM, *etc*.). The memory 214 typically comprises a native operating system 216, one or more native applications, emulation systems, or emulated applications for any of a variety of operating systems and/or emulated hardware platforms, emulated operating systems, *etc.* For example, the applications may include application specific software which may comprise some or all the components of the computing devices 102, 114, 122 depicted in FIG. 1. In accordance with such embodiments, the components are stored in memory 214 and executed by the processing device 202, thereby causing the processing device 202 to perform the operations/functions relating to the features disclosed herein. One of ordinary skill in the art will appreciate that the memory 214 can, and typically will, comprise other components which have been omitted for purposes of brevity. For some embodiments, the components in the computing device 102 may be implemented by hardware and/or software.

Input/output interfaces 204 provide any number of interfaces for the input and output of data. For example, where the computing device comprises a personal computer, these components may interface with one or more user input/output interfaces 204, which may comprise a keyboard or a mouse, as shown in FIG. 2. The display 208 may comprise a computer monitor, a plasma screen for a PC, a liquid crystal display (LCD) on a hand held device, a touchscreen, or other display device.

In the context of this disclosure, a non-transitory computer-readable medium stores programs for use by or in connection with an instruction execution system, apparatus, or device. More specific examples of a computer-readable medium may include by way of example and without limitation: a portable computer diskette, a random access memory (RAM), a read-only memory (ROM), an erasable programmable read-only memory (EPROM, EEPROM, or Flash memory), and a portable compact disc read-only memory (CDROM) (optical).

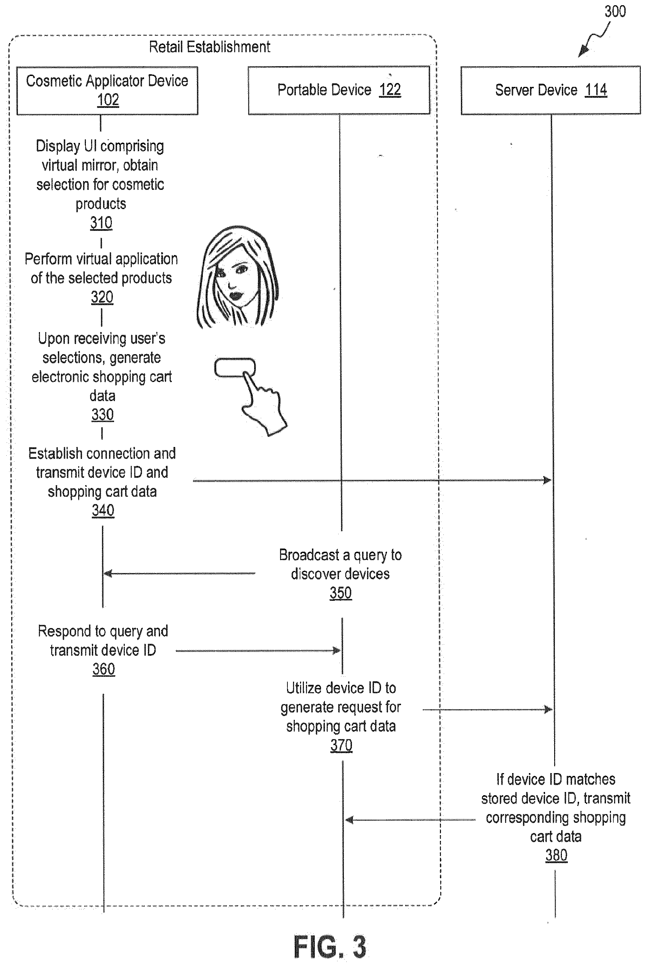

Reference is made to FIG. 3, which is a flowchart 300 that shows the interaction between various components in the networked environment of FIG. 1 for transferring shopping cart data to a portable device. It is understood that the flowchart 300 of FIG. 3 provides merely an example of the different types of functional arrangements that may be employed to implement the operation of the various components of the computing devices 102, 114, 122 depicted in FIG. 1. As an alternative, the flowchart 300 of FIG. 3 may be viewed as depicting an example of steps of a method implemented in the computing devices 102, 114, 122 according to one or more embodiments.

Although the flowchart 300 of FIG. 3 shows a specific order of execution, it is understood that the order of execution may differ from that which is depicted. For example, the order of execution of two or more blocks may be scrambled relative to the order shown. Also, two or more blocks shown in succession in FIG. 3 may be executed concurrently or with partial concurrence. It is understood that all such variations are within the scope of the present disclosure.

At block 310, the cosmetic applicator device 102 displays a user interface comprising a virtual mirror to the user to facilitate the virtual application and selection of one or more cosmetic products. At block 320, the cosmetic applicator device 102 performs virtual application of the selected cosmetic products onto a facial region of the user. In some instances, the cosmetic applicator device 102 may be installed in a retail establishment, where the user selects cosmetic products and undergoes virtual application of the selected cosmetic products with the aid of a makeup professional.

In block 330, the cosmetic applicator device 102 generates shopping cart data once the user has selected the desired cosmetic products. In some embodiments, the user may manipulate a Ul control to upload the shopping cart to the server device 114. At block 340, the cosmetic applicator device 102 establishes a first connection with the server device 114, where the first connection may be established over a network 112 (FIG. 1) or over a mobile communication network such as a GSM (Global System for Mobile Communications) network, a CDMA (Code Division Multiple Access) network, a WCDMA (Wideband Code Division Multiple Access) network, an LTE (Long-Term Evolution) network, and so on. The cosmetic applicator device 102 transmits both a device identifier (unique to the cosmetic applicator device 102) and the shopping cart data to the server device 114 via the first connection. For some embodiments, the device identifier may comprise a Bluetooth identifier.

At block 350, the portable device 122 broadcasts a query to identify devices within close proximity (ranging from a few inches to a few meters) of the portable device 122. This may be performed over a second connection established over a short-range wireless connection comprising, for example, a Bluetooth connection, NFC (near field communication) connection, a Zigbee connection, and so on.

At block 360, the cosmetic applicator device 102 responds to the query and transmits the device identifier (sent earlier to the server device 114) to the portable device 122. At block 370, the portable device 122 utilizes this device identifier to transmit a request to the server device 114 to retrieve the shopping cart data sent earlier by the cosmetic applicator device 102 and now stored in the server device 114. If the device identifier issued with the request matches the device identifier sent earlier, the server device 114 responds to the request by transmitting the shopping cart data.

For some embodiments, the cosmetic applicator device 102 transmits a wish list to the portable device 122 via the server device 114 based on cosmetic products selected by the user, where the wish list is utilized by the user for performing future purchases of items in the wish list. For some embodiments, price comparison information for the cosmetic products in the wish list is also provided to the portable device 122. For some embodiments, the server device 114 may be configured to determine whether a source specified in the shopping cart data has the selected one or more cosmetic products in stock. If one or more of the selected cosmetic products are not in stock, the server device 114 may be configured to transmit a message to the portable device 122 to notify the user that one or more of the selected cosmetic products are not in stock. The server device 114 may also provide an estimated date of availability of the selected cosmetic products that are not in stock. For some embodiments, the server device 114 may provide an alternate source for purchasing the one or more selected cosmetic products that are not in stock. The user may then use the portable device 122 to purchase products based on the shopping cart data. Thereafter, the process in FIG. 3 ends.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A method implemented in a cosmetic applicator device, comprising:
displaying a user interface to a user, the user interface comprising a virtual mirror for displaying a facial region of the user, the user interface further comprising graphical components for selecting corresponding cosmetic products;
obtaining at least one selection of a cosmetic product from the user;
responsive to the selection, displaying in the virtual mirror, application of the cosmetic product onto the facial region of the user;
generating shopping cart data comprising a listing of the selected cosmetic products;
establishing a first connection with a server device;
transmitting a device identifier unique to the cosmetic applicator device and the shopping cart data to the server device via the first connection; and
responsive to receiving a device query broadcast by a portable device via a second connection, transmitting the device identifier to the portable device, wherein the portable device utilizes the device identifier to obtain the shopping cart data from the server device.

2. The method of claim 1, further comprising transmitting a wish list to the portable device via the server device based on cosmetic products selected by the user, wherein the wish list is utilized by the user for performing future purchases of items in the wish list.

3. A method implemented in a server device, comprising:
establishing a first connection with a cosmetic applicator device configured for performing virtual application of cosmetic products;
obtaining a device identifier and corresponding shopping cart data from the cosmetic applicator device via the first connection, wherein the device identifier is unique to the cosmetic applicator device;
receiving from a portable device, a request to download the shopping cart data based on an identifier for a device discovered by the portable device,
comparing the identifier utilized for requesting the shopping cart data with the device identifier obtained from the cosmetic applicator device; and
responsive to the identifier matching the device identifier, transmitting the requested shopping cart data to the portable device.

4. The method of claim 3, further comprising:
obtaining a selection of one or more cosmetic products from a user of the portable device based on the shopping cart data; and
determining whether a source specified in the shopping cart data has the selected one or more cosmetic products in stock.

5. The method of claim 4, further comprising transmitting a message to the portable device for cosmetic products that are not in stock, the message indicating at least one of: an estimated date of availability for the cosmetic products that are not in stock; and an alternate source for purchasing the cosmetic products that are not in stock.

6. The method of one of claims 3 to 5, further comprising:
receiving a wish list from the cosmetic applicator device, the wish list specifying one or more cosmetic products selected by a user of the portable device; and
transmitting price comparison information to the portable device for the one or more cosmetic products specified in the wish list.

7. The method of one of claims 1 to 6, wherein the first connection is established over a mobile communication network comprising one of: a GSM (Global System for Mobile Communications) network, a CDMA (Code Division Multiple Access) network, a WCDMA (Wideband Code Division Multiple Access) network, and an LTE (Long-Term Evolution) network.

8. The method of one of claims 1 to 3, wherein the or a second connection is established over a short-range wireless connection comprising one of: a Bluetooth connection, NFC (near field communication) connection, and a Zigbee connection.

9. A method implemented in a portable device, comprising:
broadcasting a query over a first connection to discover devices;
obtaining one or more device identifiers in response to the query;
for each of the one or more device identifiers, transmitting a request to a server device to download shopping cart data, wherein transmitting the request is performed utilizing each of the one or more device identifiers, wherein responsive to one of the one or more device identifiers matching a device identifier sent by a cosmetic applicator device configured to perform virtual application of cosmetic products, the server device transmits shopping cart data in response to the request, wherein the device identifier is sent by the cosmetic applicator device to the server device via a second connection.

10. The method of claim 9, wherein the first connection is established over a short-range wireless connection comprising one of: a Bluetooth connection, NFC (near field communication) connection, and a Zigbee connection.

11. The method of claim 8 or 10, wherein the device identifier comprises a Bluetooth identifier.

12. The method of claim 9 or 10, wherein the second connection is established over a mobile communication network comprising one of: a GSM (Global System for Mobile Communications) network, a CDMA (Code Division Multiple Access) network, a WCDMA (Wideband Code Division Multiple Access) network, and an LTE (Long-Term Evolution) network.

13. The method of one of claims 1 to 12, wherein the cosmetic applicator device is located in a retail establishment.

14. The method of claim 9, further comprising receiving a wish list from the server device based on cosmetic products selected by a user of the cosmetic applicator device, wherein the wish list is utilized by the user for performing future purchases of items in the wish list.
